(19) Europäisches Patentamt
European Patent Office
Office européen des brevets

(11) **EP 2 342 926 B1**

(12) **EUROPEAN PATENT SPECIFICATION**

(45) Date of publication and mention
of the grant of the patent:
**26.09.2012 Bulletin 2012/39**

(51) Int Cl.:
***H04B 7/155*** (2006.01)

(21) Application number: **09774701.8**

(22) Date of filing: **08.10.2009**

(86) International application number:
**PCT/IB2009/007065**

(87) International publication number:
**WO 2010/041126 (15.04.2010 Gazette 2010/15)**

(54) **WIRELESS TRANSMISSION AND RECEPTION METHOD AND APPARATUS**

VERFAHREN UND VORRICHTUNG ZUM DRAHTLOSEN SENDEN UND EMPFANGEN

PROCÉDÉ ET APPAREIL D'ÉMISSION ET DE RÉCEPTION SANS FIL

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(30) Priority: **10.10.2008 IT UD20080214**

(43) Date of publication of application:
**13.07.2011 Bulletin 2011/28**

(73) Proprietor: **Universita' Degli Studi di Udine
33100 Udine (IT)**

(72) Inventors:
• **MONTESSORO, Pier Luca
I-33040 Faedis (IT)**

• **PIERATTONI, Davide
I-34072 Gradisca D'Isonzo (IT)**
• **DE CANEVA, Daniele
I-33010 Venzone (IT)**

(74) Representative: **Petraz, Davide Luigi et al
GLP Srl
Piazzale Cavedalis, 6/2
33100 Udine (IT)**

(56) References cited:
**US-A1- 2003 012 168      US-A1- 2005 117 530**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

FIELD OF THE INVENTION

The present invention concerns a wireless transmission and reception method suitable for communication between two or more terminal devices, and the relative transceiver apparatus comprising a plurality of devices, disposed according to a strip-type topography.

BACKGROUND OF THE INVENTION

Wireless transmission and reception methods and the relative transceiver apparatuses are known, such as for example Wireless Sensor Networks (WSN), comprising a plurality of transceiver devices associated with a plurality of sensors. Such methods and apparatuses can be used in particular contexts for the transmission and reception of data and/or voice signals in a predetermined area, substantially limited, in which normal radio frequency transmissions and receptions do not give adequate or efficient performance. This is due to the presence of obstacles or particular geographical or environmental conformations that can considerably degrade communication, or even make it impossible. A typical application for example is that of speleological explorations in which it is necessary to establish and maintain communication between two terminal nodes, where a first node is associated with one or more speleologists who are going deep down below the surface, and a second node is associated with the supporting staff on the surface.

A known method and apparatus are described, for example, in the US patent application n. 2005/0117530 in the name of LUCENT TECHNOLOGIES INC.. The method provides a plurality of transceiver nodes, grouped together according to predetermined sets or clusters, where each cluster is provided with a main node able to transmit a signal, or beacon, in correspondence with prefixed time intervals. On the basis of the prefixed intervals, specific time intervals are also defined in which, in turn, each of the nodes remains in an inactive state, or sleep, allowing to reduce the overall absorption of energy of each node.

Known methods and apparatuses are made so as to render efficient the localization of the devices, the propagation of the signal in radiofrequency between the devices, or so as to minimize their energy consumption and their processing load. Moreover, such known methods are made so as to allow an almost free disposition of the transceiver devices, according to a non-predetermined distribution topology. In order to obtain this, transmission and reception between the devices is based on a communication protocol, normally in conformity with the ISO-OSI model (International Standard Organization - Open System Interconnection), having an architecture with seven layers or levels. Known methods provide that at least part of the devices of the apparatus must possess or share one or more addressing or routing tables, comprising the network addresses of the devices of the apparatus. The tables, pre-memorized or dynamically memorized, for example during an initialization step, are necessary to manage the correct transmission of the messages between the transceiver devices.

Furthermore, to prevent conflicts and/or collisions between devices attempting a simultaneous transmission, the level of access to the communication medium, or Medium Access Control (MAC), of said communication protocol, provides to manage a contest mechanism made in a non-deterministic manner, that is, introducing during the transmission step some limited but unpredictable delays. The contest mechanism is normally also used to verify by each device that it has a message to transmit that no other device has already begun doing so.

One disadvantage of known methods and apparatuses is that the algorithms used to balance the traffic in the network produce frequent modifications to the transmission paths, entailing a difficult management of the tables and the relative algorithms used for routing the messages. This has a negative influence on the performance in real time applications or when it is necessary to guarantee a high quality of service (or QoS). In this case, this may have a negative impact both on the band width of the transmission channel, and also on the overall latency times of transmission.

Another disadvantage is that the contest mechanism and processing mechanism of the routing tables maintain the devices in an almost continuous processing state and therefore contribute to increase their energy consumption. This in turn has a considerable influence on the operating autonomy of the apparatus.

One purpose of the present invention is to perfect a wireless transmission and reception method for communication between at least two terminal nodes, which has the same reliability as a cable connection, avoiding the use and management of routing tables and with predetermined latency times.

Another purpose of the present invention is to achieve a wireless transceiver apparatus, for communication between at least two terminal nodes, which has the same reliability in communication as a cable connection, and which has low energy consumption.

The Applicant has devised, tested and embodied the present invention to overcome the shortcomings of the state of the art and to obtain these and other purposes and advantages.

SUMMARY OF THE INVENTION

The present invention is set forth and characterized in the independent claims, while the dependent claims describe other characteristics of the invention or variants to the main inventive idea.

In accordance with the above purposes, a transmission and reception method according to the present invention is used for the wireless transmission and reception of signals between a first transceiver device and at least a second transceiver device. Here and hereafter by signal we mean a set of data, a packet or frame, having a predetermined size and constant.

The first and the second transceiver devices are disposed outside a reciprocal range of direct radio communication. The transmission and reception method provides a step of distributing a plurality of intermediate transceiver devices, disposed in a substantially non-uniform manner between the first device and the second transceiver device, so as to form a chain or strip of linear transmission and reception.

The method comprises a step of direct transmission, in which a first sequence of signals is transmitted from the first device to the second device at regular time intervals or windows, temporally consecutive and suitable to define a synchronous base of the transmission times. Each signal of the first sequence is transmitted from an intermediate device to an immediately adjacent intermediate device and successive along the path toward the second device. By immediately adjacent device we mean a device, intermediate or extreme, that is, first or second device, disposed consecutively in a direction of travel of the transceiver chain or strip between the first and the second device.

According to one feature of the invention, the method also comprises a step of indirect transmission, in which a second sequence of signals is transmitted from the second device to the first device, and in which each signal of said second sequence is transmitted from an intermediate device to an immediately adjacent device and successive in the inverse path from the second to the first device. The signals of the second sequence are transmitted at predetermined time intervals so that in each window each intermediate device receives at most only one signal of the first or second sequence so as to avoid possible collisions.

According to a variant of the present invention, in the steps of direct and indirect transmission, each intermediate device receives and transmits by means of a plurality of transceiver units, disposed in a non-uniform manner and substantially random so as to define a predetermined cover area of the radio signal.

Each transceiver unit is suitable to communicate both with at least one or more units of the same device, and also with at least one or more transceiver units of immediately adjacent intermediate devices.

According to a another variant, in said steps of direct or indirect transmission and in an associated window, each transceiver unit of an intermediate device receives and memorizes the signal sent by an adjacent device, preceding along the path between the first and the second terminal device.

According to this variant, the steps of direct or indirect transmission comprise a sub-step in which only a predetermined transceiver unit, or main unit, of each intermediate device retransmits to an adjacent and successive device, along the path between the first and the second device, the signal in turn received from another adjacent and preceding device along the path between the first and second device.

The other units, or back-up units, of the transceiver device detect, in each associated window, whether the main unit retransmits said signal. In the event of non-transmission, a predetermined back-up unit, selected according to a predefined priority and ensured by an auto-organization procedure of the back-up units, transmits the previously received signal to the adjacent device.

According to another variant of the invention, moreover, in the distribution step, first of all the first device or master device is activated, suitable to synchronize the other devices by sending sequences of said signals.

According to another variant, the distribution step also comprises a first sub-step of auto-configuration in which the units auto-configure themselves so as to combine with one of the intermediate devices.

According to another variant, the distribution step also comprises a second sub-step in which the units of each intermediate device are configured as main unit or back-up unit.


BRIEF DESCRIPTION OF THE DRAWINGS

These and other characteristics of the present invention will become apparent from the following description of a preferential form of embodiment, given as a non-restrictive example with reference to the attached drawings wherein:

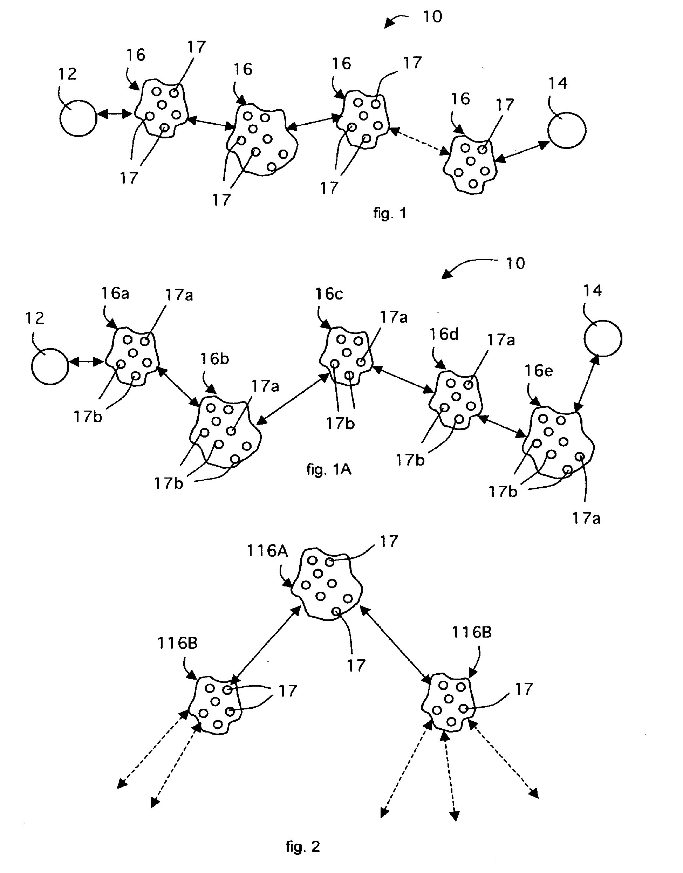

- fig. 1 is a schematic view of an apparatus according to the present invention;
- fig. 1 a is a schematic view of an apparatus according to the present invention in a first configuration;
- fig. 2 is a schematic view of an apparatus according to the present invention in a second configuration;
- fig. 3 is a schematic view of a temporal diagram of the transmission and reception method according to the present invention;
- fig. 4 is a temporal diagram of the transmission capacity of the apparatus as a function of the size of the signals received and/or transmitted;

- fig. 5 is a schematic temporal transmission diagram of the method according to the present invention;
- fig. 6 is a schematic temporal diagram of a transmission in a first step of the method according to the present invention;
- fig. 6A is a schematic temporal diagram of a transmission in a second step of the method according to the present invention;
- fig. 7 is a diagram relating to the probability of collision of the transmission of signals in a step of the method according to the present invention;
- fig. 8 is a state diagram of two steps of the method according to the present invention;
- fig. 9 is a schematic view of a temporal diagram of the transmission and reception method of the apparatus in fig. 2.

DETAILED DESCRIPTION OF A PREFERENTIAL FORM OF EMBODIMENT

With reference to the attached drawings, a transceiver apparatus 10 or strip according to the present invention can be used to achieve a wireless transmission and reception method of a sequence of packets 20 of data between terminal devices or nodes. Each packet 20 has a predefined and constant dimension.

The apparatus 10 comprises a first 12 and a second transceiver node 14 between which a bidirectional data communication is established. The first 12 and the second node 14 are respectively disposed in positions or at distances such that it is impossible to establish a reciprocal direct communication. The nodes 12, 14, for example of portable processing terminals or other, comprise short range radiofrequency transceiver means of a known type and low consumption, or transceiver radio.

The apparatus 10 also comprises a plurality of clusters 16, or groups, distributed at predetermined reciprocal distances, not necessarily uniformly between the nodes 12, 14 so as to form a strip or chain, linear or almost linear, between the nodes 12, 14.

Each cluster 16 also comprises a plurality of transceiver units 17, each provided with short range and low consumption radiofrequency transceiver means, or transceiver radio, compatible with the transceiver radios of the nodes 12, 14. The units 17 are suitable to render the connection between the two nodes 12, 14 stable and reliable by means of a redundancy mechanism which will be explained in more detail hereafter.

In this case, both the nodes 12, 14 and the transceiver units 17 comprise autonomous feed means of a known type and not shown in the drawings. In this case the nodes 12, 14 can be fed by rechargeable batteries. In this way it is possible to locate the apparatus 10 where desired and for a desired functioning time, avoiding frequent maintenance operations.

The distribution of the units 17 of each cluster 16 is substantially random, so as to cover a predefined area in which each unit 17 is able to communicate both with the remaining units 17 of its own cluster 16 and also with the units 17 of immediately adjacent clusters 16. It is also provided that the units 17 of any two non-adjacent clusters 16, such as for example the clusters 16a, 16c in fig. 1A, cannot communicate directly, that is, the radius of radiofrequency cover of the transceiver means is substantially less than the minimum between the distances between any two non-adjacent clusters 16.

The apparatus 10 as described heretofore functions as follows.

In a first step, or distribution step, the apparatus is installed, disposing the nodes 12, 14 in the desired position and distributing a predetermined number of clusters 16 interposed between the nodes 12, 14 according to the reciprocal disposition as previously described, so as to form a transceiver chain.

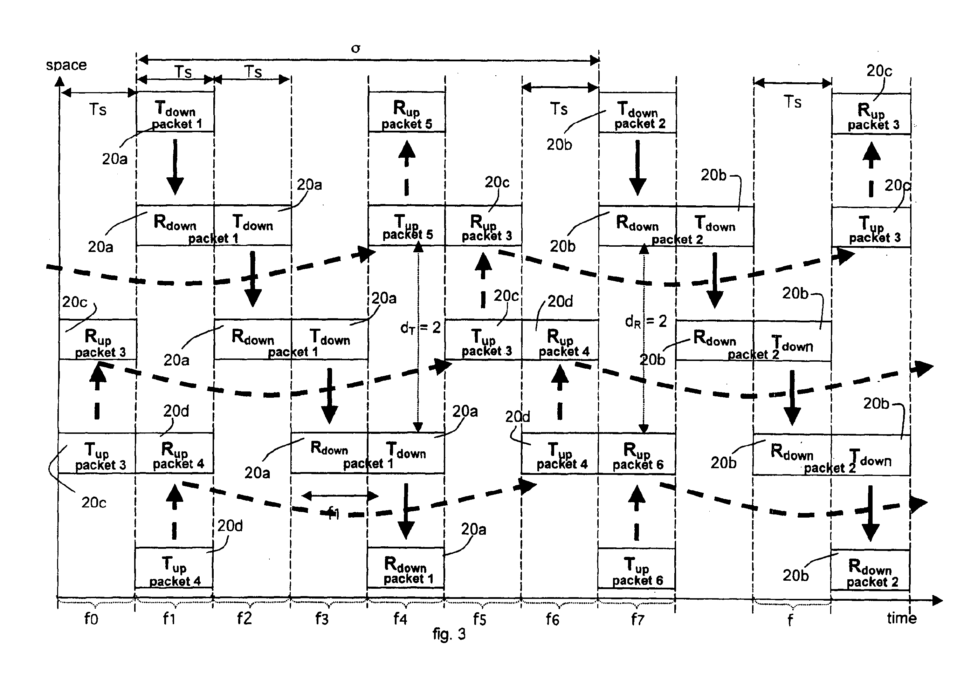

The apparatus 10 allows to effect a bidirectional communication between the first 12 and the second node 14. Fig. 3 shows a space-time diagram of the transmission of the packets 20 of data, arriving from a sequence of packets of data not shown and sent from the first 12 or second node 14, between the clusters 16. In particular, a direct transmission of the packets 20 is described in the path from the first node 12 to the second node 14, and also the inverse transmission of packets 20 in the path from the second node 14 to the first node 12.

Transmission occurs according to a Time Division Multiple Access (TDMA) transmission mode. The basis of the times is divided into a sequence of synchronous temporal windows or slots "f", consecutive and with a predetermined time amplitude such as to allow transmission between adjacent clusters 16 or between a cluster 16 and one of the nodes 12, 14 of packets 20. The packets 20 have a fixed dimension, which entails that the windows "f' all have the same time duration "Ts" or slot time. The transmission process occurs according to a transmission pattern of the staggered type, as will be described hereafter.

With reference to fig. 3, the transmissions of the packets 20 between adjacent clusters 16 in the direction of transmission that goes from the first node 12 to the second node 14 are indicated by a continuous arrow. The transmissions of the packets 20 between adjacent clusters 16 in the direction of transmission that goes from the second node 14 to the first node 12 are indicated by a discontinuous arrow.

With reference to figs. 1a and 3, during the time window "f1" cluster 16a transmits to cluster 16b a packet 20a in the direction of transmission that goes from the first node 12 to the second node 14. The packet 20a was received by cluster 16a in a previous time window "f0".

During the time window "f0", moreover, a packet 20c is transmitted from cluster 16d to cluster 16c and temporarily memorized in cluster 16c, thus preventing any interference and/or collision since cluster 16b is at a distance such that it cannot detect the messages transmitted by cluster 16d.

During a following time window "f2", cluster 16b transmits to cluster 16c, in the direction of transmission that goes from the first node 12 to the second node 14, the packet 20a received in the previous time window "f1". The packet 20c remains memorized in cluster 16c since the window "f2" is used for the transmission of the packet 20a.

In a subsequent time window "f3" cluster 16c transmits to cluster 16d, in the direction of transmission that goes from the first node 12 to the second node 14, the packet 20a received in the previous time window "f2", continuing to keep packet 20c memorized, since window "f3" is currently engaged for the transmission of packet 20a.

In a subsequent time window "f4" cluster 16d transmits to cluster 16e, in the direction of transmission that goes from the first node 12 to the second node 14, the packet 20a received in the previous time window "f3". In this time window "f4", moreover, a packet 20d memorized in cluster 16b, in a previous step (not shown), is transmitted to cluster 16a, in the direction of transmission that goes from the second node 14 to the first node 12, remaining memorized in cluster 16a.

In a subsequent time window "f5" the packet 20c memorized in cluster 16c, in the previous step "f0", is transmitted to cluster 16b, in the direction of transmission that goes from the second node 14 to the first node 12. In the same step "f5" the packet 20a is transmitted from cluster 16e to the second node 14, thus reaching its final destination.

In a subsequent time window "f6" a packet 20d memorized in cluster 16d, in the previous step "f1", is transmitted to cluster 16c, in the direction of transmission that goes from the second node 14 to the first node 12, remaining memorized in it for five subsequent steps.

The transmission of packets 20 continues periodically in the two directions, keeping the previous staggered pattern, always guaranteeing a transmission distance dT, in the direction from the first 12 to the second node 14, at least equal to two hops between clusters 16, and an inverse transmission or reception distance dR, in the direction from the second 14 to the first node 12, always equal to at least two hops between clusters 16, preventing any interference in the wireless communication.

The base period σ (sigma) of the transceiver pattern is equal to six times the slot time "Ts". Moreover, the transmission latency in the direction of transmission that goes from the first 12 to the second node 14 is a slot time "Ts" for every cluster 16, while the transmission latency in the direction of transmission that goes from the second 14 to the first node 12 is equal to five slot times "Ts" for every cluster 16.

In this way it is possible to establish a data transmission and reception method between the nodes 12, 14 in which the level of access to the medium, or Medium Access Control (MAC) of the transceiver protocol is simple and has no complex procedures for managing the network addresses. Therefore, it is possible to avoid the management of tables of addresses, thus simplifying the construction of the devices 12, 14 and 16. In fact, it is not necessary to provide either a capacious memory or a processing unit with high processing power. This allows to reduce the construction costs and also to substantially reduce consumption of the apparatus 10.

No low level acknowledge mechanism is required either, to guarantee the correct transmission and reception of packets between adjacent clusters 16. In this way the units 17 of the clusters 16 can be made simply and inexpensively since it is necessary to memorize only one packet at a time, avoiding the management of possible queues, and hence more memory.

It is possible, however, to provide to make more sophisticated error correction mechanisms to increase the reliability of transmission between clusters 16, or to make an acknowledge mechanism at the highest levels of the transmission protocol, for example between the first node 12 and the second node 14.

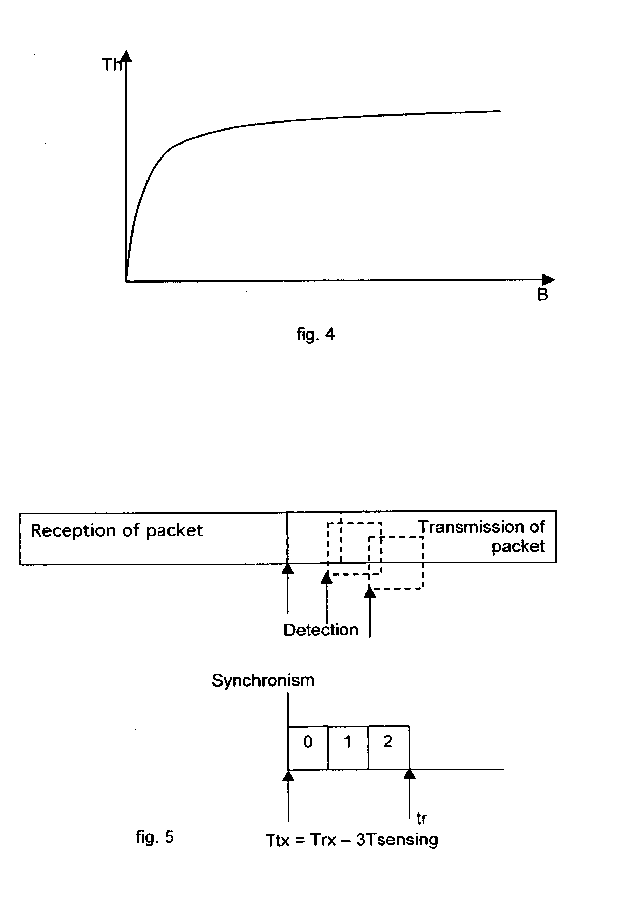

A redundancy mechanism is also provided, in which the packets 20 that are received and re-transmitted by each individual cluster 16 are substantially received by all the units 17 of the cluster 16, but are re-transmitted in a subsequent time slot Ts only by a single and predetermined main unit 17a. The remaining units 17 of the cluster 16 assume the role of back-up units 17b in which they carry out, in the transmission time slot Ts of their own cluster 16, a detection to identify the presence of energy in the wireless channel and to verify at least the start of transmission of the packet 20 by the main unit 17a (fig. 5). In fact, if for any reason the main unit 17a were to fail to re-transmit during the time slot Ts allocated to it, either because it has not received the packet 20 correctly, or because it is damaged or has exhausted its operating autonomy, then the packet 20 received by the cluster 16 is transmitted, during the same time slot Ts, by another unit 17 of the same cluster 16, which is autonomously activated as main unit 17a, while the remaining units continue to function as back-up units 17b. A back-up unit 17b is activated according to an auto-allocation mechanism, as will be explained in more detail hereafter, which can be carried out either during the installation of the apparatus 10, or during its normal functioning.

The redundancy mechanism also allows to allocate and/or modify dynamically the role of main unit, as will be explained in more detail hereafter, among the various units 17 of each cluster 16, also according to the actual energy absorbed by each unit 17 during functioning. In this way, therefore, it is possible to share, during the operating life of the apparatus 10, the total consumption of energy among the various units 17 of each cluster 16, increasing the operating autonomy of each cluster 16 and hence increasing the overall reliability and performance of the apparatus 10.

The mechanism described above therefore defines an immediate redundancy equal to the number of back-up units 17b, equal to the number of units 17 of the cluster 16 less one. This means that the time slot Ts must be sized coherently and compatibly with the redundancy mechanism and with the size of the packet.

It is also possible to insert into the header of each packet 20 some information, for example a flag, to inform the subsequent clusters 16 that the redundancy mechanism has actually intervened to correct a transmission anomaly.

It is possible, for example, to provide that, if a cluster 16 transmits without said redundancy mechanism being activated, then the back-up units 17b can temporarily stop feed to or switch off their transceiver radios, thus saving energy. On the contrary, if the transmission of the packet 20 is not detected, then all the units 17 of the cluster 16 must remain active until transmission is completed from one of the units 17. Synchronization is guaranteed during reception, on the contrary, by means of a code-scheduling field included in each packet 20. The packet 20 can for example be structured so as to comprise a field suitable to define a synchronization preamble, another field suitable to contain an "ID" number, that is, a number identiying the unit 17 that transmitted the packet 20 from the transmitting cluster 16. The packet 20 also comprises a data field to be filled to a maximum size compatible with the duration of the window "f" or transmission slot.

In this way, the redundancy mechanism of each cluster 16, based on the capacity of each unit 17 to detect the radiofrequency energy of the wireless channel, allows both to keep consumption of the apparatus 10 low, and also to react quickly in the event of failed transmission.

Fig. 5 shows an example of the redundancy and consecutive malfunctioning management mechanism of three units of a cluster 16. The detection by a back-up unit 17b for the start of transmission of a packet 20 takes place at regular intervals. In this case, that is, in the case where transmission is not carried out either by the main unit 17a or by two consecutive back-up units 17b, the packet is transmitted by a third back-up node 17b. In this case the overall transmission time of the packet 20 is equal at least to the reception time, reduced by three times the detection time, or Tsensing.

The installation of the apparatus 10 provides that, during its installation or distribution, the first device 12 carries out a synchronization which is maintained during its whole life cycle. In fact, the first device 12 regularly transmits packets 20 of data or signaling. When a new cluster 16 is distributed, that is, its units 17, the latter regulate their own transceiver radio to a low power value, so as to allow reception of units 17 disposed in a restricted surrounding area. In this way each unit 17 is able to exchange auto-configuration messages necessary to organize the cluster 16 just distributed, as will be described in more detail hereafter. At the end of this procedure the clusters 16 are ready to receive and transmit the packets 20. The synchronization between clusters 16 is maintained by means of the packets transmitted by the first device 12, or master. In fact, every cluster that is added to the strip, that is, to the apparatus 10, starts to receive packets 20 sent by the first device 12 or master, and re-transmitted by clusters 16 already installed and functioning. Therefore, then the cluster 16 just added is synchronized with the packets 20 allowing alignment with the timer clock of the master device which is therefore distributed in cascade.

Synchronization is then maintained during the functioning of the transmission strip. To allow the units 17 to align correctly with the timer clock of the master, each packet 20 comprises a field, as will be explained hereafter, suitable to indicate the scheduling order of the cluster 16 transmitting in the outward and return travel. The possible bandwidth remaining unused when the redundancy mechanism does not intervene can allow to reorganize each cluster 16 at once, to allow new units 17 to be added and installed.

New units 17 are distributed and installed in the apparatus 10 according to the context in which the unit 17 itself is installed. In fact it is possible to distinguish two different scenarios.

In a first scenario, or construction of the cluster 16, a plurality of units 17 carry out said auto-configuration operations to define a new cluster 16. This substantially comprises the synchronization of the new cluster 16 with the previous cluster 16, the allocation of a transmission order to the new cluster 16 and the choice of the main unit 17a and the back-up unit 17b, as will be described in more detail hereafter. This first scenario is suitable to make the strip progressively, distributing and installing the various clusters 16 in an orderly, progressive and sequential manner starting from the master device 12.

In a second, post-construction scenario, a single unit 17 is added to a cluster 16 that is already active and functioning. The second scenario is typical of a maintenance situation, since it allows to immediately replace one or more units 17 that are not functioning or are at the end of their operating autonomy.

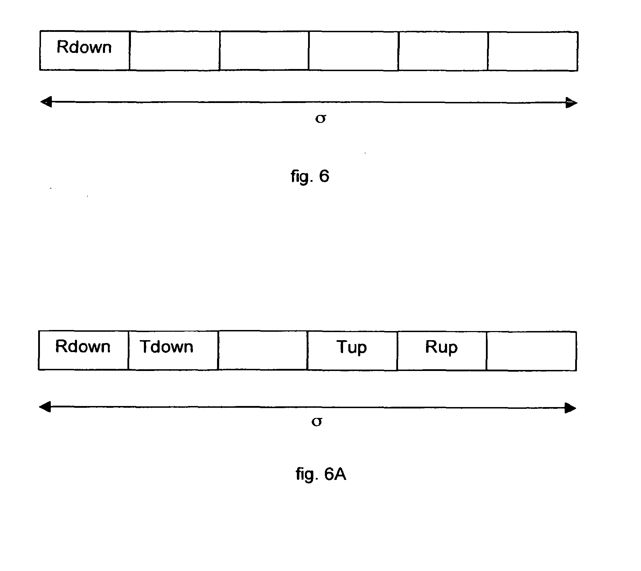

Therefore, when it is switched on, each unit 17 activates a learning procedure in which it listens to other units 17. From the moment the clusters 16 receive and transmit according to the staggered pattern previously described with duration $\sigma$ (figs. 6 and 6A), a newly installed node, putting itself in reception mode for an interval of time TL greater than $\sigma$, is able to establish whether it is part of an already functioning cluster 16 or not. In fact, the absence (fig. 6) of transmission of packets 20 to the master device, and hence packets arriving only from the previous cluster 16, is indicative of a cluster construction scenario. On the contrary, a defined and complete transmission pattern (fig. 6A) is indicative of the fact that the unit is operating in a post-construction scenario. In the learning step, each unit 17 performs its own synchronization with the packets 20 received.

In the cluster construction scenario, after the learning and synchronization procedure, each unit 17 allocates itself its own identification number "ID" in order to establish a hierarchy inside the cluster 16. The "ID" number is an integer varying in the range from 0 to Nmax-1, wherein Nmax is the maximum number of active units 17 allowed for each cluster 16. An "ID" number of zero identifies the main unit 17a, whereas subsequent "ID"s specify the sequence with which the back-up units 17b intervene to achieve the redundancy mechanism as previously described.

Each unit 17 of the cluster 16 selects the lowest "ID" number not yet allocated. The allocation occurs substantially during the slots "f" not used for the transmission between adjacent clusters 16. Conflicts are managed by means of a probabilistic base mechanism as described hereafter.

In each usable slot each unit 17 can remain listening to other adjacent units 17 or can announce to the other units, with a probability "p" (simulating the launch of a "fixed" coin that has "p" probabilities of coming up heads and 1-"p" probabilities of coming up tails), its own "ID", autonomously selected, and registering it as its own. All the units 17 listening consider the "ID" number received as already reserved and compare it with their own. If the "ID" received coincides with its own, which has not been announced, then the specific unit 17 increases its own "ID" to announce it in a subsequent slot, always according to the probabilistic mechanism previously described. After a predetermined number of slots it is possible to allocate a single and different "ID" to every unit 17 of the cluster 16.

Possible conflicts in the simultaneous transmission in the same slot of the same "ID" by two different units 17 are not detected by the transmitting units. However, due to the collision occurring during transmission, the other units 17 do not receive the message correctly and do not consider the associated "ID" as reserved or booked. The unit 17 that next announces its "ID" allows to resolve the preceding conflict and therefore the allocation sequence is realigned.

The reservation of the "ID" number does not provide an acknowledgement mechanism. A node that announces an auto-allocated "ID" supplies an indication that all the "ID"s below have been correctly received and reserved. The only exception concerns the allocation of the last "ID", before the end of the auto-allocation procedure. In the event - somewhat rare - that a conflict occurs in the allocation of the last "ID", then two or more nodes will have reserved it simultaneously. The only effect is that it reduces by one the number of back-up units 17b.

The construction of the cluster 16 ends after a sufficient number of iterations of the auto-allocation procedure. The number of iterations is linked to the probability that a valid "ID" has been allocated to all the Nmax units 17 of the cluster 16.

In fact, the probability P that a transmission occurs in a slot without collisions can be calculated from the function of mass probability of a binomial distribution, since it is equivalent to the probability of success among "n" Bernouilli tests, where "n" represents the number of units 17 in competition.

$$P = \binom{n}{1} p(1-p)^{n-1} = np(1-p)^{n-1}$$

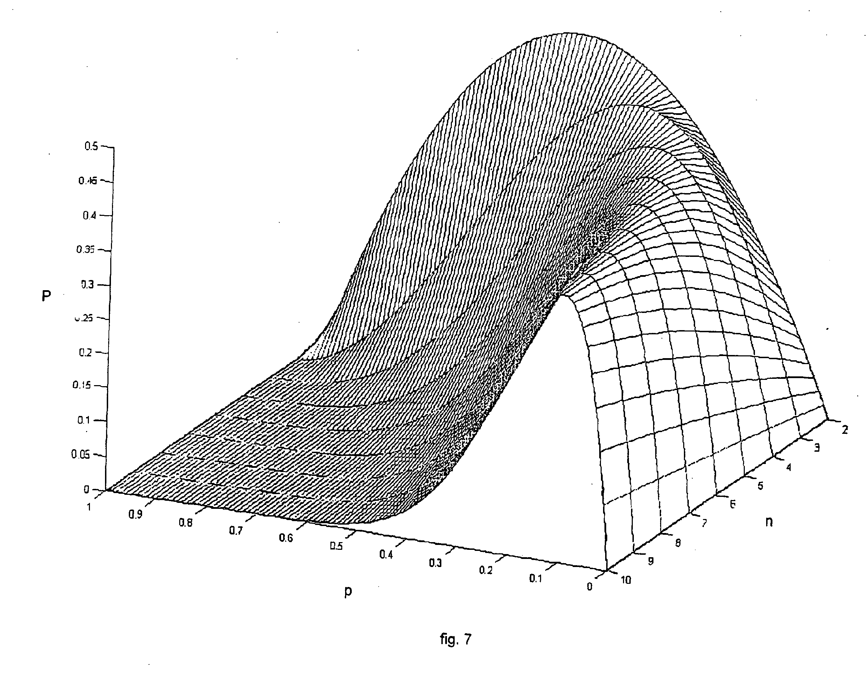

The probability P can thus be expressed as a non-linear relation between the number of units 17 in competition and the transmission probability "p" of each unit 17. Fig. 7 gives a graphic representation of the probability P.

Deriving the previous expression with respect to "p", the best value of probability "P" is found as follows:

$$\frac{\partial P}{\partial p} = n(1-p)^{n-1} + n(n-1)p(1-p)^{n-2}$$ which leads to the maximum of "P" with respect to "p" for:

$$\max P @ p = \frac{1}{n} \qquad (2)$$

Therefore, with for example 10 competing units, the probability "p" must be equal to 0.1 to obtain a probability P of non-collision of 39%, which translates on average into a transmission valid after three slots.

It is possible to accelerate the cluster construction procedure by dividing each slot into smaller subslots, given that the messages relating to the "ID"s are shorter than the packets 20 provided in the communication between the first 12 and second node 14.

It is also possible to provide that the maximum number of units 17 can be more than Nmax. After the allocation of the last "ID" equal to Nmax-1, the excess units 17 of the cluster 16 abandon the allocation procedure and are switched to a low consumption functioning state or sleep. The excess units 17 can wake up periodically to replace some units 17 of the cluster 16 that are no longer functioning, according to the post-construction scenario that will now be described.

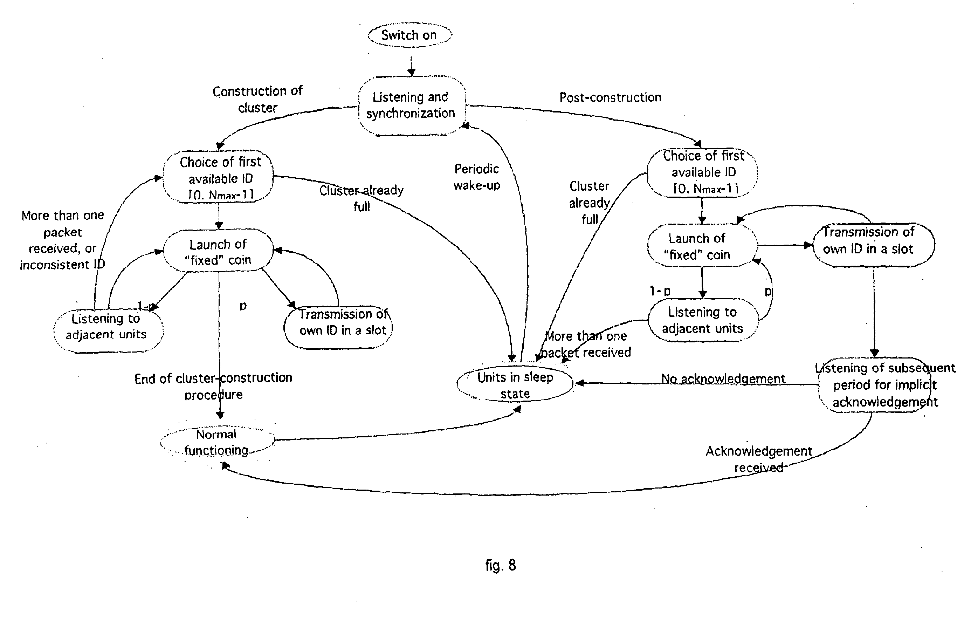

In the post-construction scenario (fig. 8), after the learning and synchronization procedure, a unit 17 that is inside an already formed cluster 16 verifies whether the cluster 16 is full, that is, if it has already reached the maximum number Nmax of active and functioning units 17. In this case the unit 17 can move or return to the low consumption functioning state.

This verification provides to use a special field Nact comprised in the header of the packets 20 and able to indicate the current number of active units 17. To keep this information consistent, all the active units 17 that belong to a cluster 16 have to update their counter every time a unit 17 combines with or abandons the cluster 16. The initial number of units 17 derives from the cluster construction procedure, whereas the subsequent updates can be made according to failed transmissions and post-construction combinations.

The post-construction combination, that is, during the normal functioning of the apparatus 10, is similar to the cluster construction procedure. A unit 17 can attempt to obtain the first "ID" number available in the interval 0, Nmax-1, choosing the first unused "ID". In fact, the unused "ID" could derive from a unit that has switched to the sleep state or has not been allocated during an incomplete cluster construction procedure. To combine with the cluster 16, the unit announces its "ID" transmitting the same type of packet as described in the cluster construction scenario. The transmission always takes place with a probability "p" but can only take place in the sixth slot (fig. 6A) so as to prevent interferences during the normal functioning of the data flow along the strip. For this reason the transmission power must be kept low so as to allow reception only inside the cluster 16.

Although in the post-construction scenario there are fewer units 17 in competition compared with the cluster construction scenario, two or more packets 20 can always collide. A verification of the parameter Nact functions as an implicit acknowledgement that a unit has been accepted in the cluster 16.

In the post-construction scenario, given the lower number of units 17 in competition, it is possible to allocate a transmission probability "p" of the "ID" number which is lower than that of the cluster construction procedure.

Furthermore, in the post-construction scenario too it is possible to divide the sixth usable slot into smaller subslots, to accelerate the allocation of the "ID" and to reduce energy consumption.

Fig. 8 shows a state diagram of the cluster construction and post-construction scenarios.

The performance of the apparatus 10 will now be described.

The time window "f" on which the functioning of the apparatus according to the present invention is based must be sized according to the needs of reception. Indicating by $\rho$ the maximum number of nodes that belong to a cluster 16, the duration of a slot "f" is connected to four parameters that can be summarized in this way:

- $T_M$ is the time margin needed to receive the packet 20 or frame from its start, even if the synchronism clock signal of the unit 17 receiving is delayed with respect to the synchronism clock signal of the unit 17 transmitting; the greater the discrepancy, that is, the delay described above, the greater is the value of TM;
- $T_{pck}$ is the reception time, that is, the time needed to receive the packet 20, which is closely connected to the transmission speed, that is, the bit rate managed by the transceivers of the nodes 12, 14 and the units 17;
- $T_R$ is the reaction time of a back-up node 17, obtained as the sum of the time needed to detect the re-transmission of the packet 20 of its own cluster 16 and the time needed to switch the transceiver radio from a detection state to a transmission state;
- $T_{SW}$ is the switching time, that is, the time needed to switch each unit 17 from a reception state to a transmission state; the switching time also comprises the time needed for memorizing and processing the packet 20.

Therefore, the time dedicated to transmitting a packet is equal to Tpck + $T_R \cdot (\rho$-1) whereas the overall duration of a slot is:

$$T_S = T_M + T_R(\rho - 1) + T_{pck} + T_{SW} \tag{3}$$

The time slot Ts can be expressed as a function of the size of the packet B expressed in bits and the bit rate V of the transceiver radio; thus by grouping together differently the other terms under the variable K dependent on $\rho$ we obtain the following expression:

$$T_S = K(\rho) + \frac{B}{V} \tag{4}$$

After having defined the time slot Ts it is also possible to express the latency and transmission capacity of the system. In particular we shall see that the maximum transceiver capacity is symmetrical in both directions of transmission in the strip formed by the apparatus 10, whereas the latency is different and greater in the direction of transmission that goes from the second node 14 to the first node 12. For the sake of simplicity, from now on we will indicate as downlink the data flow that goes from the first node 12 to the second node 14 and as uplink the data flow that goes from the second node 14 to the first node 12.

The transmission capacity Th can be expressed as a ratio between the number of bits that form each packet 20 and the time interval that passes between two consecutive transmissions:

$$Th = \frac{B}{\sigma T_S} = \frac{B}{\sigma \left( K + \dfrac{B}{V} \right)} \qquad (5)$$

where, as described, σ is the base period of the transmission formed as already shown by six windows "f". It is easy to see that, from the above expression (5), the transmission capacity increases as the size B of the packet 20 increases, and reaches maximum when the size of B tends to infinite:

$$\lim_{B \to \infty} Th = \frac{V}{\sigma} \qquad (6)$$

Due to possible interferences, the value of the base period σ is limited to six. This is a good compromise between performance and latency, since from the expression (6) it is possible to obtain that the maximum operating limit is equal to 0.25.

The latency for the downlink transmission is clearly proportional to the number of hops that must be made to pass through the whole strip:

$$L_{downlink} = hops \cdot T_S = hops \cdot \left( K + \frac{B}{V} \right) \qquad (7)$$

The expression (7) shows that the requirements for having a low latency value are opposite those for having a good transmission capacity. It is therefore necessary to balance the size of the packet 20: a larger size improves the transmission capacity of the apparatus 10, whereas a smaller size reduces the latency of the strip. The choice of a duration for an apparatus 10 to be used in various applications can be simplified by considering a threshold behavior of the function, that is, which expresses the capacity of the expression (5). Deriving the function with respect to the size B of the packet we obtain:

$$\frac{dTh}{dB} = \frac{K}{\sigma \left( K + \dfrac{B}{V} \right)^2} \qquad (8)$$

It is easy to see that a packet 20 with a relatively short size is sufficient to reach capacity values near to the theoretical maximum, as shown in fig. 4.

The capacity of the transmission channel in the inverse direction, that is, in uplink, is the same, whereas the latency is greater as shown by the following expression:

$$L_{uplink} = hops \cdot (\sigma - 1) \cdot T_S = hops \cdot (\sigma - 1) \cdot \left( K + \frac{B}{V} \right) \qquad (9)$$

The redundancy mechanism previously described promotes reliability to the detriment of channel capacity, but this is not a problem inasmuch as it is precisely reliability that is the most important parameter in the functioning of a network like that of the apparatus 10 described here, since the quantity of data normally transmitted in downlink or in uplink is not generally too high.

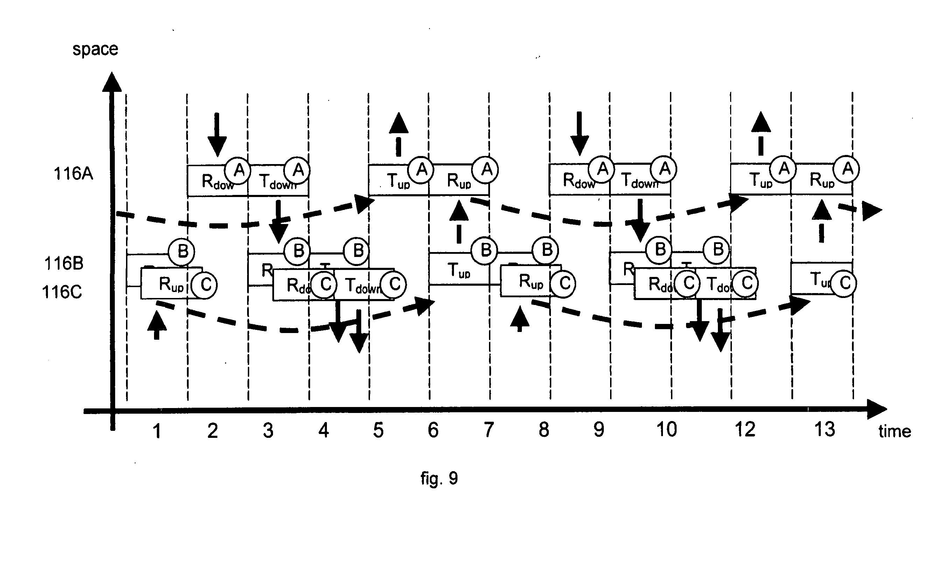

According to a variant of the present invention, shown in fig. 3, the apparatus 10 can be distributed according to a tree-type topology, in which the first node 12, or master node, not shown in the drawing, is disposed at the root of the tree so as to provide synchronization and control. It is not necessary to dispose more complex nodes or devices in correspondence with the forks of the tree, since the clusters 116 operate as in the strip disposition. The transceiver pattern is shown in fig. 9. According to this pattern the master node signals to the "leaves" which the windows "f" are where they can transmit, according to a master-slave type approach.

Clusters 116A, 116B, 116C receive messages at alternate intervals, or more alternated according to the number of branches. If the transmission windows "f" are only used when they are preceded by a successful transmission, then the diagram shown in fig. 9 prevents the generation of conflicts observing that the "leaves", that is, clusters 116B, 116C cannot transmit simultaneously. It should be noted that in this case the packets 20 sent by from cluster 11B do not come within a reception slot of cluster 116C and vice versa. Therefore, in this topology it is not necessary that the radio channels are physically separate, that is, clusters 116B, 116C could also be disposed at a reciprocal distance in which they are able to communicate.

The distribution and construction of the clusters 116 is done in a similar way to that already described, with the stratagem that the "leaf" clusters 116 just distributed must wait for an explicit authorization from the master before starting to transmit their own data.

It is clear that modifications and/or additions of parts and/or steps may be made to the transmission and reception method and relative apparatus 10 as described heretofore, without departing from the field and scope of the present invention. For example, it comes within the field of the present invention to provide that the transmission between adjacent clusters occurs not according to a subdivision into time windows of the Time Division Multiple Access or TDMA type, but by means of a subdivision of the frequencies used of the Frequency Division Multiple Access or FDMA type.

It is also clear that, although the present invention has been described with reference to some specific examples, a person of skill in the art shall certainly be able to achieve many other equivalent forms of transmission and reception method and relative apparatus, having the characteristics as set forth in the claims and hence all coming within the field of protection defined thereby.

**Claims**

1. Wireless transmission and reception method for the transmission of sequences of signals (20) between a first transceiver device (12) and at least a second transceiver device (14), wherein said first transceiver device (12) and second transceiver device (14) are disposed outside a reciprocal direct radiocommunication range, comprising a distribution step of a plurality of intermediate transceiver devices (16), disposed in a non-uniform manner between said first transceiver device (12) and second transceiver device (14) so as to form a linear transceiver chain, and a step of direct transmission, wherein a first sequence of signals (20) is transmitted from the first transceiver device (12) toward the second transceiver device (14) at regular time intervals, temporally consecutive, able to define a synchronous times base, in which each signal (20) of said first sequence is re-transmitted from an intermediate device (16) to an intermediate device (16) immediately adjacent and successive along the path toward the second transceiver device (14), **characterized in that** it comprises a step of indirect transmission, in which a second sequence of signals (20) is transmitted from the second transceiver device (14) toward the first transceiver device (12), wherein each signal (20) of said second sequence is transmitted from an intermediate device (16) to an intermediate device (16) immediately adjacent and successive along the path toward said first transceiver device (12), said signals (20) of said second sequence being transmitted at predetermined regular time intervals defined by said times base in such a manner that each intermediate device (16) receives at most a single signal (20) of said first or second sequence in order to avoid collisions.

2. Method as in claim 1, **characterized in that** each intermediate device (16) comprises a plurality of transceiver units (17), disposed in a non-uniform manner so as to define a predetermined cover area of radio signal.

3. Method as in claim 2, **characterized in that** each transceiver unit (17) is able to communicate both with at least one or more transceiver units (17) of the same intermediate device (16), and also with at least one or more transceiver units (17) of intermediate devices (16) immediately adjacent along the path between the first and second device (12, 14).

4. Method as in claim 3, **characterized in that** in said direct or indirect transmission steps each transceiver unit (17) of an intermediate device (16) receives the signal sent by a device (12, 14, 17) adjacent and preceding along the path between the first transceiver device (12) and second transceiver device (14).

5.  Method as in claim 4, **characterized in that** said direct or indirect transmission steps comprise a sub-step in which only one predetermined unit (17a) of each intermediate unit (16) re-transmits to all the units (17) of a device (16) adjacent and successive along the path between the first transceiver device (12) and second transceiver device (14) the signal (20) in turn received from an intermediate device (16) adjacent and preceding along the path between said first and second device (12, 14).

6.  Method as in claim 5, **characterized in that**, in said sub-step of said direct or indirect transmission steps, the transmission of the signal (20) is made by a back-up unit (17b), selectively activated among the transceiver units (17) of the intermediate device (16) based on the detection of non-transmission of the main unit (17a).

7.  Method as in any claim hereinbefore, **characterized in that** in said distribution step the first transceiver device (12) is activated in order to synchronize said intermediate devices (16) by means of the transmission of sequences of said signals (20).

8.  Method as in claim 7, **characterized in that** said distribution step also comprises a first sub-step of self-configuration in which said units (17) self-configure themselves so as to combine with a predetermined intermediate device (16).

9.  Method as in claim 8, **characterized in that** said distribution step comprises a second sub-step of self-configuration in which the units (17) of each intermediate device are configured as main unit (17a) or as backup unit (17b).

10. Wireless transceiver apparatus for the transmission of sequences of signals (20) between a first transceiver device (12) and at least a second transceiver device (14), wherein said first transceiver device (12) and second transceiver device (14) are disposed outside a reciprocal direct radio range, wherein said apparatus comprises a plurality of intermediate transceiver devices (16), disposed in a non-uniform manner between said first transceiver device (12) and second transceiver device (14) so as to form a linear transceiver chain so that each intermediate device (16) is adapted to receive and transmit only with adjacent intermediate devices, wherein said intermediate devices (16) are adapted to transmit a first sequence of signals (20) emitted by the first transceiver device (12) towards the second transceiver device (14), according to a synchronous times basis, wherein each signal (20) of said first sequence is re-transmitted at regular time intervals defined by said times base from each intermediate device (16) to an intermediate device (16) adjacent and successive along the path toward the second transceiver device (14), **characterized in that** said intermediate devices (16) are adapted to transmit a second sequence of signals (20) emitted by the second transceiver device (14) towards the first transceiver device (12), wherein each signal (20) of said second sequence is transmitted from an intermediate device (16) to an intermediate device (16) immediately adjacent and successive along the path toward said first transceiver device (12), wherein said signals (20) of said second sequence are transmitted at predetermined regular time intervals defined by said times base in such a manner that each intermediate device (16) is adapted to receive at most a single signal (20) of said first or second sequence.

11. Apparatus as in claim 10, **characterized in that** each intermediate device (16) comprises a plurality of transceiver units (17), disposed in a non-uniform manner in a predetermined area.

12. Apparatus as in claim 11, **characterized in that** each transceiver unit (17) is adapted to communicate both with at least one or more transceiver units (17) of the same intermediate device (16), and also with at least one or more transceiver units (17) of intermediate devices (17) immediately adjacent along the path between the first and second device (12, 14).

13. Apparatus as in claim 12, **characterized in that** each intermediate device (16) comprises a single main unit (17a) selected from among the transceiver units (17) of the device (16), and adapted to transmit the signal (20) to an adjacent intermediate device (16), and a plurality of back-up units (17b), each adapted to be selectively and mutually activated, among the other units (17) of the intermediate device (16), with every transmission of a signal (20) of said first or second sequence.

**Patentansprüche**

1.  Drahtloses Übertragungs- und Empfangsverfahren zur Übertragung von Signalfolgen (20) zwischen einer ersten Transceivervorrichtung (12) und mindestens einer zweiten Transceivervorrichtung (14), wobei die erste Transceivervorrichtung (12) und die zweite Transceivervorrichtung (14) außerhalb einer gegenseitigen direkten Funkverbindungsreichweite angeordnet sind, umfassend einen Verteilungsschritt einer Vielzahl von Zwischen-Transceivervorrichtungen (16), die in einer ungleichmäßigen Art zwischen der ersten Transceivervorrichtung (12) und der zweiten Transceivervorrichtung (14) angeordnet sind, um eine lineare Transceiver-Kette zu bilden, und einen direkten Übertragungsschritt, wobei eine erste Signalfolge (20) von der ersten Transceivervorrichtung (12) in Richtung der zweiten Transceivervorrichtung (14) in gleichmäßigen, zeitlich aufeinanderfolgenden Zeitintervallen gesendet wird, die fähig sind, eine synchrone Zeitbasis zu definieren, in der jedes Signal der ersten Folge von einer Zwischenvorrichtung (16) an eine unmittelbar angrenzende und entlang des Pfads in Richtung der zweiten Transceivervorrichtung (14) nachfolgende Zwischenvorrichtung (16) übertragen wird, dadurch gekenntzeichnet, dass es einen indirekten Übertragungsschritt umfasst, in dem eine zweite Signalfolge (20) von der zweiten Transceivervorrichtung (14) in Richtung der ersten Transceivervorrichtung (12) übertragen wird, wobei jedes Signal (20) der zweiten Folge von einer Zwischenvorrichtung (16) an eine unmittelbar angrenzende und entlang des Pfads in Richtung der ersten Transceivervorrichtung (12) nachfolgende Zwischenvorrichtung (16) gesendet wird, wobei die Signale (20) der zweiten Folge in vorgegebenen gleichmäßigen Zeitintervallen gesendet werden, die durch die Zeitbasis derart definiert sind, dass jede Zwischenvorrichtung (16) höchstens ein Einzelsignal (20) der ersten oder der zweiten Folge empfängt, um Kollisionen zu vermeiden.

2. Verfahren nach Anspruch 1, **dadurch gekennzeichnet, dass** jede Zwischenvorrichtung (16) eine Vielzahl von Transceivereinheiten (17) umfasst, die in einer ungleichmäßigen Art angeordnet sind, um einen vorgegebenen Funksignal-Abdeckungsbereich zu definieren.

3. Verfahren nach Anspruch 2, **dadurch gekennzeichnet, dass** jede Transceivereinheit (17) zur Kommunikation sowohl mit mindestens einer oder mehreren Transceivereinheiten (17) derselben Zwischenvorrichtung (16) als auch mit mindestens einer oder mehreren Transceivereinheiten (17) von Zwischenvorrichtungen (16) fähig ist, die entlang dem Pfad zwischen der ersten und der zweiten Vorrichtung (12, 14) unmittelbar angrenzen.

4. Verfahren nach Anspruch 3, **dadurch gekennzeichnet, dass** in den direkten oder indirekten Übertragungsschritten jede Transceivereinheit (17) einer Zwischenvorrichtung (16) das durch eine angrenzende und entlang dem Pfad zwischen der ersten Transceivervorrichtung (12) und der zweiten Transceivervorrichtung (14) vorhergehende Vorrichtung (12, 14, 17) gesendete signal empfängt.

5. Verfahren nach Anspruch 4, **dadurch gekennzeichnet, dass** die direkten oder die indirekten Übertragungsschritte einen Unterschritt umfassen, in dem nur eine vorgegebene Einheit (17a) jeder Zwischeneinheit (16) das von einer angrenzenden und entlang des Pfades zwischen der ersten und der zweiten Vorrichtung (12, 14) vorhergehenden Zwischenvorrichtung (16) wiederum empfangene Signal (20) an alle Einheiten (17) einer angrenzenden und entlang des Pfades zwischen der ersten Transceivervorrichtung (12) und der zweiten Transceivervorrichtung (14) nachfolgenden Vorrichtung (16) weiterüberträgt.

6. Verfahren nach Anspruch 5, **dadurch gekennzeichnet, dass** in dem Unterschritt der direkten oder der indirekten Übertragungsschritte die Übertragung des Signals (20) durch eine Sicherungseinheit (17b) vollzogen wird, die aufgrund der Erfassung einer Nichtübertragung der Haupteinheit (17a) wahlweise aus den Transceivereinheiten (17) der Zwischenvorrichtung (16) aktiviert wird.

7. Verfahren nach einem der vorhergehenden Ansprüche, **dadurch gekennzeichnet, dass** in dem Verteilungsschritt die erste Transceivervorrichtung (12) aktiviert wird, um mittels der Übertragung der Signalfolgen (20) die Zwischenvorrichtungen (16) zu aktivieren.

8. Verfahren nach Anspruch 7, **dadurch gekennzeichnet, dass** der Verteilungsschritt auch einen ersten Selbstkonfigurations-Unterschritt umfasst, in dem die Einheiten (17) sich selbst so konfigurieren, um mit einer vorgegebenen Zwischenvorrichtung (16) zusammenzuwirken.

9. Verfahren nach Anspruch 8, **dadurch gekennzeichnet, dass** der Verteilungsschritt einen zweiten Selbstkonfigurations-Unterschritt umfasst, in dem die Einheiten (17) jeder Zwischenvorrichtung als Haupteinheit (17a) oder als Sicherungseinheit (17b) konfiguriert werden.

10. Drahtloses Transceivergerät zur Übertragung von Signalfolgen (20) zwischen einer ersten Transceivervorrichtung (12) und mindestens einer zweiten Transceivervorrichtung (14), wobei die erste Transceivervorrichtung (12) und die zweite Transceivervorrichtung (14) außerhalb einer gegenseitigen direkten Funkreichweite angeordnet sind, wobei das Gerät eine Vielzahl von Zwischen-Transceivervorrichtungen (16) umfasst, die in einer ungleichmäßigen Art zwischen der ersten Transceivervorrichtung (12) und der zweiten Transceivervorrichtung (14) angeordnet sind, um eine lineare Transceiver-Kette zu bilden, so dass jede Zwischenvorrichtung (16) dazu ausgelegt ist, nur von angrenzenden / an angrenzende Zwischenvorrichtungen zu empfangen und zu übertragen, wobei die Zwischenvorrichtungen (16) dazu ausgelegt sind, eine durch die erste Transceivervorrichtung (12) in Richtung der zweiten Transceivervorrichtung (14) ausgesandte erste Signalfolge (20) gemäß einer synchronen Zeitbasis zu übertragen, wobei jedes Signal (20) der ersten Folge in durch die Zeitbasis definierten gleichmäßigen Zeitintervallen von jeder Zwischenvorrichtung (16) an eine angrenzende und entlang des Pfads in Richtung der zweiten Transceivervorrichtung (14) nachfolgende Zwischenvorrichtung (16) weiterübertragen wird, **dadurch gekennzeichnet, dass** die Zwischenvorrichtungen (16) dazu auslegt sind, eine durch die zweite Transceivervorrichtung (14) in Richtung der ersten Transceivervorrichtung (12) ausgesandte zweite Signalfolge (20) zu übertragen, wobei jedes Signal (20) der zweiten Folge von einer Zwischenvorrichtung (16) an eine unmittelbar angrenzende und entlang des Pfads in Richtung der ersten Transceivervorrichtung (12) nachfolgende Zwischenvorrichtung (16) übertragen wird, wobei die Signale (20) der zweiten Folge in vorgegebenen gleichmäßigen Zeitintervallen übertragen werden, die durch die Zeitbasis derart definiert sind, dass jede Zwischenvorrichtung (16) dazu ausgelegt ist, höchstens ein einzelnes Signal (20) der ersten oder der zweiten Folge zu empfangen.

11. Gerät nach Anspruch 10, **dadurch gekennzeichnet, dass** jede Zwischenvorrichtung (16) eine Vielzahl von Transceivereinheiten (17) umfasst, die in einem vorgegebenen Bereich ungleichmäßig angeordnet sind.

12. Vorrichtung nach Anspruch 11, **dadurch gekennzeichnet, dass** jede Transceivereinheit (17) dazu ausgelegt ist, sowohl mit mindestens einer oder mehreren Transceivereinheiten (17) derselben zwischenvorrichtung (16) als auch mit mindestens einer oder mehreren Transceivereinheiten (17) von Zwischenvorrichtungen (17) zu kommunizieren, die entlang des Pfades zwischen der ersten und der zweiten Vorrichtung (12, 14) unmittelbar angrenzen.

13. Gerät nach Anspruch 12, **dadurch gekennzeichnet, dass** jede Zwischenvorrichtung (16) eine aus den Transceivereinheiten (17) der Vorrichtung (16) gewählte einzelne Haupteinheit (17a) umfasst und dazu ausgelegt ist, das Signal (20) an angrenzende Zwischenvorrichtungen (16) und eine Vielzahl von Sicherungseinheiten (17b) zu senden, die jeweils dazu ausgelegt sind, mit jeder Übertragung eines Signals (20) der ersten oder der zweiten Folge wahlweise und gegenseitig aus den anderen Einheiten (17) der Zwischenvorrichtung (16) aktiviert zu werden.

**Revendications**

1. Procédé de transmission et de réception sans fil pour la transmission de séquences de signaux (20) entre un premier dispositif transcepteur (12) et au moins un second dispositif transcepteur (14), dans lequel lesdits premier dispositif transcepteur (12) et second dispositif transcepteur (14) sont disposés hors d'une portée de radiocommunication directe réciproque, comprenant une étape de distribution d'une pluralité de dispositifs transcepteurs intermédiaires (16), disposés de manière non uniforme entre lesdits premier dispositif transcepteur (12) et second dispositif transcepteur (14) afin de former une chaîne de transcepteurs linéaire, et une étape de transmission directe, dans laquelle une première séquence de signaux (20) est transmise depuis le premier dispositif transcepteur (12) vers le second dispositif transcepteur (14) à des intervalles de temps réguliers, temporellement consécutifs, en mesure de définir une base de temps synchrone, où chaque signal (20) de ladite première séquence est retransmis d'un dispositif intermédiaire (16) à un dispositif intermédiaire (16) immédiatement adjacent et successif le long du trajet vers le second dispositif transcepteur (14), **caractérisé en ce qu'**il comprend une étape de transmission indirecte, dans laquelle une seconde séquence de signaux (20) est transmise depuis le second dispositif transcepteur (14) vers le premier dispositif transcepteur (12), où chaque signal (20) de ladite seconde séquence est transmis d'un dispositif intermédiaire (16) à un dispositif intermédiaire (16) immédiatement adjacent et successif le long du trajet vers ledit premier dispositif transcepteur (12), lesdits signaux (20) de ladite seconde séquence étant transmis à des intervalles de temps réguliers prédéterminés définis par ladite base de temps de telle sorte que chaque dispositif intermédiaire (16) reçoive au plus un seul signal (20) de ladite première ou seconde séquence afin d'éviter les collisions.

2. Procédé selon la revendication 1, **caractérisé en ce que** chaque dispositif intermédiaire (16) comprend une pluralité d'unités de transcepteur (17), disposées de manière non uniforme afin de définir une zone de couverture prédéterminée du signal radio.

3. Procédé selon la revendication 2, **caractérisé en ce que** chaque unité de transcepteur (17) est en mesure de communiquer à la fois avec au moins une ou plusieurs unités de transcepteur (17) du même dispositif intermédiaire (16), et également avec au moins une ou plusieurs unités de transcepteur (17) de dispositifs intermédiaires (16) immédiatement adjacents le long du trajet entre le premier et le second dispositif (12, 14).

4. Procédé selon la revendication 3, **caractérisé en ce que** dans lesdites étapes de transmission directe ou indirecte, chaque unité de transcepteur (17) d'un dispositif intermédiaire (16) reçoit le signal envoyé long du trajet entre le premier dispositif transcepteur (12) et le second dispositif transcepteur (14).

5. Procédé selon la revendication 4, **caractérisé en ce que** lesdites étapes de transmission directe ou indirecte comprennent une sous-étape dans laquelle une seule unité prédéterminée (17a) de chaque unité intermédiaire (16) retransmet à toutes les unités (17) d'un dispositif (16) adjacent et successif le long du trajet entre le premier dispositif transcepteur (12) en le second dispositif transcepteur (14) le signal (20) reçu à son tour d'un dispositif intermédiaire (16) adjacent et précédent le long du trajet entre ledit premier et ledit second dispositif (12, 14).

6. Procédé selon la revendication 5, **caractérisé en ce que**, dans ladite sous-étape desdites étapes de transmission directe ou indirecte, la transmission du signal (20) est réalisée par une unité de secours (17b), activée sélectivement parmi les unités de transcepteur (17) du dispositif intermédiaire (16) sur la base de la détection d'une non-transmission de l'unité principale (17a).

7. Procédé selon l'une quelconque des revendications précédentes, **caractérisé en ce que** dans ladite étape de distribution, le premier dispositif transcepteur (12) est activé afin de synchroniser lesdits dispositifs intermédiaires (16) au moyen de la transmission de séquences desdits signaux (20).

8. Procédé selon la revendication 7, **caractérisé en ce que** ladite étape de distribution comprend également une première sous-étape d'auto-configuration dans laquelle lesdites unités (17) s'auto-configurent afin de se combiner avec un dispositif intermédiaire prédéterminé (16).

9. Procédé selon la revendication 8, **caractérisé en ce que** ladite étape de distribution comprend une seconde sous-étape d'auto-configuration dans laquelle les unités (17) de chaque dispositif intermédiaire sont configurées comme unité principale (17a) ou comme unité de secours (17b).

10. Appareil transcepteur sans fil pour la transmission de séquences de signaux (20) entre un premier dispositif transcepteur (12) et au moins un second dispositif transcepteur (14), dans lequel lesdits premier dispositif transcepteur (12) et second dispositif transcepteur (14) sont disposés hors d'une portée radio directe réciproque, où ledit appareil comprend une pluralité de dispositifs transcepteurs intermédiaires (16), disposés de manière non uniforme entre lesdits premier dispositif transcepteur (12) et second dispositif transcepteur (14) afin de former une chaîne de transcepteurs linéaire de sorte que chaque dispositif intermédiaire (16) soit adapté pour recevoir et transmettre uniquement avec des dispositifs intermédiaires adjacents, où lesdits dispositifs intermédiaires (16) sont adaptés pour transmettre une première séquence de signaux (20) émise par le premier dispositif transcepteur (12) vers le second dispositif transcepteur (14), selon une base de temps synchrone, où chaque signal (20) de ladite première séquence est retransmis à des intervalles de temps réguliers définis par ladite base de temps de chaque dispositif intermédiaire (16) à un dispositif intermédiaire (16) adjacent et successif le long du trajet vers le second dispositif transcepteur (14), **caractérisé en ce que** lesdits dispositifs intermédiaires (16) sont adaptés pour transmettre une seconde séquence de signaux (20) émise par le second dispositif transcepteur (14) vers le premier dispositif transcepteur (12), où chaque signal (20) de ladite seconde séquence est transmis d'un dispositif intermédiaire (16) à un dispositif intermédiaire (16) immédiatement adjacent et successif le long du trajet vers ledit premier dispositif transcepteur (12), où lesdits signaux (20) de ladite seconde séquence sont transmis à des intervalles de temps réguliers prédéterminés définis par ladite base de temps de telle sorte que chaque dispositif intermédiaire (16) soit adapté pour recevoir au plus un seul signal (20) de ladite première ou seconde séquence.

11. Appareil selon la revendication 10, **caractérisé en ce que** chaque dispositif intermédiaire (16) comprend une pluralité d'unités de transcepteur (17), disposées de manière non uniforme dans une zone prédéterminée.

12. Appareil selon la revendication 11, **caractérisé en ce que** chaque unité de transcepteur (17) est adaptée pour communiquer à la fois avec au moins une ou plusieurs unités de transcepteur (17) du même dispositif intermédiaire (16), et également avec au moins une ou plusieurs unités de transcepteur (17) de dispositifs intermédiaires (17) immédiatement adjacents le long du trajet entre le premier et le second dispositif (12, 14).

**13.** Appareil selon la revendication 12, **caractérisé en ce que** chaque dispositif intermédiaire (16) comprend une seule unité principale (17a) choisie parmi les unités de transcepteur (17) du dispositif (16), et adaptée pour transmettre le signal (20) à un dispositif intermédiaire adjacent (16), et une pluralité d'unités de secours (17b), chacune adaptée pour être activée sélectivement et mutuellement, parmi les autres unités (17) du dispositif intermédiaire (16), à chaque transmission d'un signal (20) de ladite première ou seconde séquence.

fig. 1

fig. 1A

fig. 2

fig. 3

fig. 4

| Reception of packet | | Transmission of packet |
| --- | --- | --- |

Detection

Synchronism

| 0 | 1 | 2 |
| --- | --- | --- |

fig. 5
$Ttx = Trx - 3Tsensing$

| Rdown | | | | | |
|---|---|---|---|---|---|

◄─────────────────────────────────►
σ

fig. 6

| Rdown | Tdown | | Tup | Rup | |
|---|---|---|---|---|---|

◄─────────────────────────────────►
σ

fig. 6A

fig. 7

fig. 8

fig. 9

EP 2 342 926 B1

**EP 2 342 926 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20050117530 A